# FASCICULE DE BREVET EUROPEEN

(11) **EP 1 338 348 B1**
(45) Date de publication et mention de la délivrance du brevet: **21.06.2006**
(21) Numéro de dépôt: 03290359.3
(22) Date de dépôt: 14.02.2003
(51) Int. Cl.: B08B 3/10, B08B 3/04

(54) **Dispositif autonome portable de lavage**
Autonome und tragbare Reinigungsvorrichtung
Autonomous and portable cleaning device

(30) Priorité: 18.02.2002 FR 0201987
(43) Date de publication de la demande: 27.08.2003
(73) Titulaire: Aktiebolaget SKF, 415 50 Göteborg (SE)
(72) Inventeur: Landrieve, Franck, 37230 Fondettes (FR)
(74) Mandataire: Casalonga, Axel

(56) Documents cités:
- US-A- 6 058 948
- US-A- 6 080 361

## Description

La présente invention concerne le domaine du nettoyage de roulements, en particulier de roulements pour patins en ligne.

Le document US 6 080 361 décrit un système de nettoyage et de désinfection de lentilles de contact comprenant une chambre de nettoyage pour maintenir les lentilles de contact. En fonctionnement, un utilisateur place une paire de lentilles de contact dans la chambre de nettoyage qui est remplie avec une solution ophtalmique. D'après les figures, les lentilles semblent flotter dans la solution ophtalmique. II n'est donc pas prévu d'organe de chargement, pas plus qu'il n'est prévu d'organe capable d'occuper une position de lavage dans laquelle l'organe est positionné au moins en partie dans le logement et une position de chargement.

Les pratiquants de patins en ligne, patins à roulettes, trottinettes, bicyclettes ou équivalents, sont préoccupés et embarrassés par l'entretien régulier des roulements de leurs engins qui sont soumis à des conditions de salissure extrêmes. Ils sont obligés, à intervalles réguliers, de démonter les roulements des roues afin de procéder ensuite à leur nettoyage, avec les moyens dont ils disposent et qui sont souvent rudimentaires.

Très souvent, le nettoyage d'un roulement consiste, après avoir procédé au démontage des joints du roulement, si celui-ci en était muni, à plonger le roulement dans un récipient contenant un produit solvant, tel que du White-Spirit, et à nettoyer l'intérieur du roulement en frottant, par exemple au moyen d'un pinceau ou d'une brosse à dents.

Le document 6 058 948 décrit un dispositif de lavage portable autonome, selon le préambule de la revendication 1.

Le nettoyage s'effectue par barbotage dans un liquide qui n'est généralement pas renouvelé ou insuffisamment renouvelé durant l'opération et qui se sature rapidement en éléments polluants. Il est donc impossible de garantir un nettoyage efficace des roulements, ce qui aura des conséquences inévitables et nuisibles sur le bon fonctionnement et la longévité desdits roulements.

La présente invention propose de résoudre les problèmes rencontrés par les pratiquants de ces sports, en facilitant le nettoyage des roulements.

Le dispositif de lavage portable autonome, notamment pour roulements, selon un aspect de l'invention, comprend un corps définissant un logement, et un organe de chargement apte à recevoir au moins un roulement, ledit organe possédant au moins une position de lavage dans laquelle il occupe au moins en partie ledit logement, le roulement étant alors disposé dans un circuit de lavage à circulation forcée, et au moins une position de chargement dans laquelle ledit organe est solidaire du corps.

Avantageusement, le circuit est de type fermé.

Ledit organe de chargement peut faire saillie par rapport au corps dans la position de chargement.

Avantageusement, l'organe de chargement comprend au moins un réceptacle pour un roulement. Le réceptacle peut comprendre un alésage prévu pour entrer en contact avec une surface extérieure de la bague extérieure d'un roulement et un épaulement en saillie dans ledit alésage et assurant le positionnement axial dudit roulement. Le réceptacle peut constituer une pièce distincte de l'organe de chargement et être adapté à un roulement de dimensions particulières tandis que l'organe de chargement est standard pour une large variété de roulements.

Avantageusement, l'organe de chargement comprend au moins un filtre amovible. Le filtre amovible peut être disposé dans le fond du réceptacle en étant retenu par ledit épaulement.

Avantageusement, le dispositif comprend des garnitures d'étanchéité solidaires du corps, en contact avec l'organe de chargement et assurant l'étanchéité entre ledit corps et l'organe de chargement. Une première garniture d'étanchéité peut comprendre une lèvre pour contact avec la bague extérieure du roulement et une lèvre pour contact avec l'organe de chargement. Une deuxième garniture d'étanchéité peut comprendre une lèvre pour contact avec le réceptacle et une lèvre pour contact avec l'organe de chargement.

Dans un mode de réalisation de l'invention, lesdites garnitures d'étanchéité comprennent des orifices de passage de fluide.

Dans un mode de réalisation de l'invention, au moins un orifice de passage de fluide est incliné par rapport à un plan passant par un axe de l'organe de chargement. On favorise ainsi la rotation du roulement lors de la circulation de fluide d'où un meilleur nettoyage du roulement.

Dans un mode de réalisation de l'invention, lesdites garnitures d'étanchéité comprennent au moins une lèvre circulaire apte à coopérer avec au moins une bague de roulement, avantageusement, avec la bague extérieure.

Dans un mode de réalisation de l'invention, au moins une garniture d'étanchéité comprend une ouverture centrale. Ladite ouverture centrale peut être disposée en regard du filtre.

Dans un mode de réalisation de l'invention, le dispositif comprend une pompe, notamment du type à actionnement manuel, solidaire dudit corps. La pompe peut comprendre un poussoir d'actionnement de circulation de fluide pour forcer le fluide à circuler dans le circuit de lavage et un moyen élastique de rappel en position initiale du poussoir. Le dispositif peut comprendre au moins un clapet empêchant la circulation de fluide dans un sens et l'autorisant en sens inverse dans le circuit de lavage.

Dans un autre mode de réalisation de l'invention, le dispositif comprend une pompe électrique pourvue d'un moteur et une batterie ou une pile d'alimentation.

Dans un mode de réalisation de l'invention, l'organe de chargement est mobile en translation par rapport au corps.

L'organe de chargement peut comprendre une partie de préhension et/ou de poussée.

Dans un autre mode de réalisation de l'invention, l'organe de chargement est mobile en rotation par rapport au corps.

Dans un mode de réalisation de l'invention, le dispositif comprend un réservoir de fluide ménagé dans ledit corps. Le dispositif peut comprendre un bouchon de réservoir.

Ainsi, l'invention propose une machine à laver portable comportant un corps à l'intérieur duquel on peut introduire un roulement au moyen d'un organe de chargement à déplacement linéaire ou par rotation, afin de placer le roulement dans un circuit de fluide de nettoyage tel qu'un solvant dégraissant. Le solvant au repos est entreposé dans une partie basse du circuit formant réservoir et est activé par une pompe de circulation qui le met en mouvement et en pression, le force à passer à travers le roulement pour le débarrasser de sa graisse et des éléments polluants. Le liquide chargé d'éléments polluants passe à travers un filtre qui retient ces derniers et est ensuite recyclé pour un nouveau passage à travers le roulement.

Suivant différents modes de réalisation de l'invention, l'organe de chargement du roulement comporte un tiroir actionné manuellement et qui traverse d'un côté à l'autre le corps de la machine. L'une des extrémités du tiroir comporte une portion de réception du roulement sous la forme d'une coupelle, comportant un filtre amovible dans sa partie inférieure. L'extrémité opposée du tiroir sert à le guider et à le manoeuvrer dans le sens de la sortie. En position de lavage, le tiroir est entièrement logé dans le corps de la machine.

Les garnitures d'étanchéité, munies de lèvres concentriques, sont prévues sur les parties internes du corps de machine pour assurer une étanchéité avec le tiroir d'une part, et avec le roulement à laver d'autre part. Les garnitures d'étanchéité sont disposées face à face avec un certain entrefer permettant le passage du tiroir. Obtient ainsi un système étanche, que le tiroir soit en position ouverte ou fermée, et on évite ainsi les fuites de liquide vers l'extérieur. La pompe peut consister en un soufflet manoeuvré axialement par un bouton-poussoir actionné du bout du doigt par l'utilisateur. Le soufflet est solidaire par son extrémité opposée au bouton d'un logement tubulaire et vient en appui par son extrémité fermée sur la base du bouton-poussoir. L'enfoncement du bouton provoque l'écrasement du soufflet et la mise en pression du fluide qui circule alors et traverse le roulement en se chargeant d'impuretés qui sont retenues dans le filtre.

L'inclinaison des trous de la garniture supérieure est telle que les jets de liquide sous pression sortant desdits trous sont orientés avec une direction possédant une composante axiale et une composante tangentielle, non nulles. On peut ainsi, par action des jets sur la cage et les billes du roulement, faire tourner ces éléments ainsi que la bague intérieure, la bague extérieure étant immobilisée en rotation par une lèvre de la garniture supérieure

La mise en rotation de ces éléments du roulement favorise un nettoyage complet en évitant que les particules polluantes soient retenues à l'intérieur du roulement.

Lorsque l'utilisateur relâche la pression sur le bouton, le soufflet reprend sa forme initiale par élasticité et fait remonter le bouton. Éventuellement, un ressort de rappel partiellement logé à l'intérieur du soufflet peut être ajouté si nécessaire pour renforcer l'effet de rappel exercé par le soufflet.

Un système de deux clapets anti-retour arrête la circulation du fluide lorsqu'on cesse la pression sur le bouton-poussoir et assure ainsi une circulation unidirectionnelle du liquide de nettoyage. Après lavage d'un roulement, on ouvre à nouveau le tiroir et on en extrait le roulement lavé. On place le roulement suivant à laver et/ou on referme le tiroir. Le filtre amovible doit, bien entendu, être lavé ou changé périodiquement. Un même tiroir peut recevoir sans problème plusieurs dimensions de réceptacles munis de filtres adaptés à différentes dimensions de roulements. La machine à laver s'adapte donc à des roulements de tailles différentes. Le liquide de nettoyage est introduit ou vidangé de la machine par un orifice fermé par un bouchon étanche.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :
- la figure 1 est une vue en coupe selon I-I de la figure 2;
- la figure 2 est une vue en coupe selon II-II de la figure 1;
- la figure 3 est une vue de détail d'une garniture d'étanchéité de la machine à laver, selon un aspect de l'invention;
- la figure 4 est une vue similaire à la figure 1, montrant le tiroir ouvert;
- la figure 5 est une vue de dessus en élévation de la machine de la figure 1; et
- la figure 6 est une vue de dessus en élévation d'une machine à laver selon un autre mode de réalisation de l'invention.

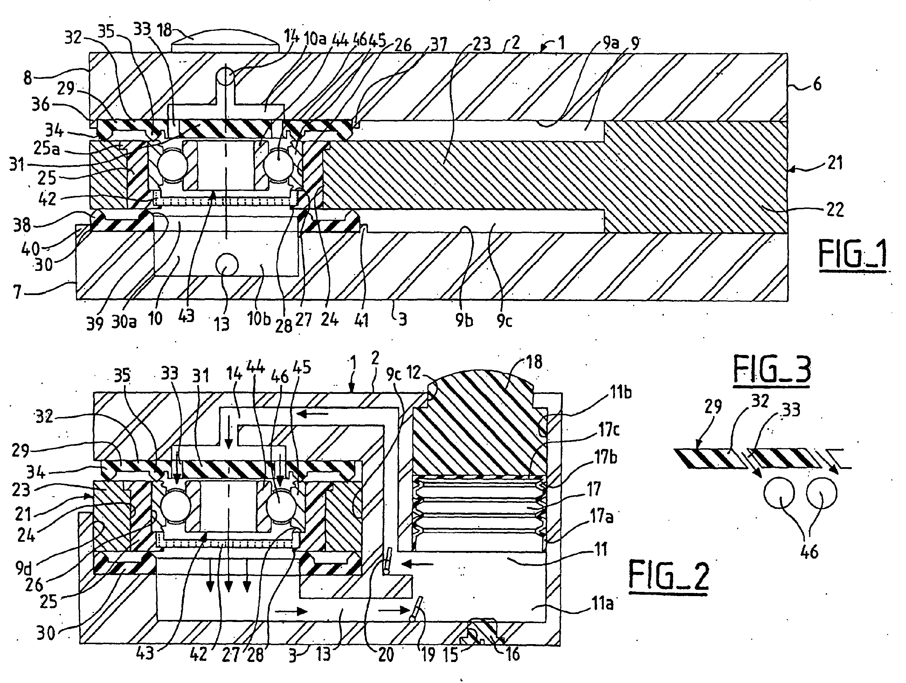

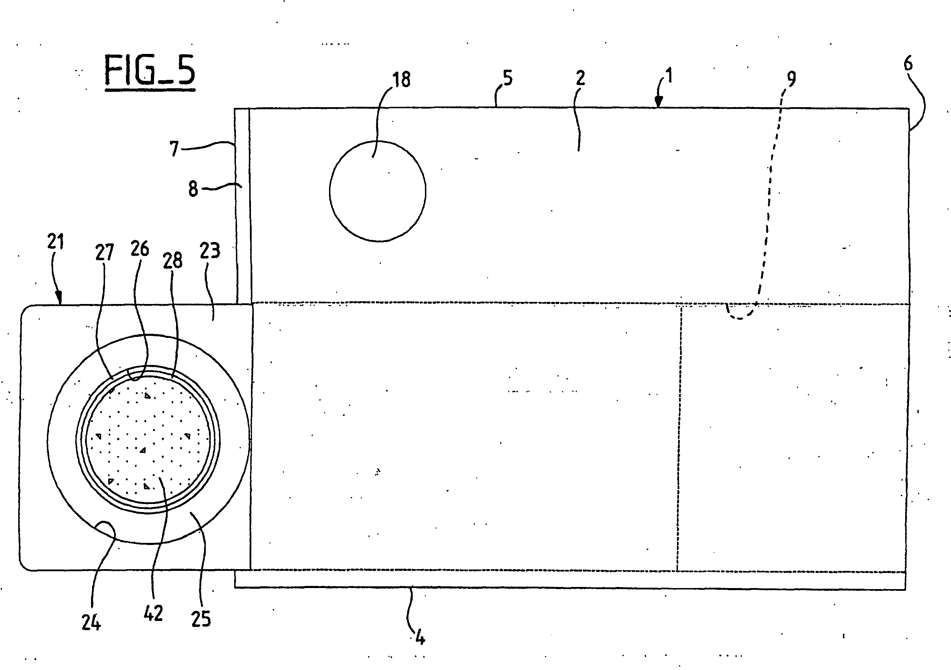

Comme illustré sur les figures 1, 2, 4 et 5, la machine de lavage portable comprend un corps 1, de forme générale parallélépipédique, comprenant une surface supérieure 2, une surface inférieure 3, une surface avant 4, une surface arrière 5, une surface latérale droite 6 et deux surfaces latérales gauche inférieure 7 et supérieure 8. Les orientations données (supérieur, inférieur, avant, arrière, droite, gauche) le sont relativement aux dessins et par raison de commodité, sans devoir être interprétées de façon absolue.

Le corps 1 est creux et comprend un logement allongé 9 le traversant de la surface latérale droite 6 aux surfaces latérales 7 et 8 opposées, une chambre de lavage 10 d'extrémités fermées, de forme générale annulaire, d'axe vertical, en intersection avec le logement 9, pourvue d'une extrémité supérieure 10a, disposée entre le logement 9 et la surface supérieure 2 du corps et une partie inférieure 10b disposée entre le logement 9 et la surface inférieure 3 dudit corps 1, et une chambre de réserve ou réservoir 11, disposée à proximité de la surface arrière 5, tandis que le logement 9 et la chambre de lavage 10 sont disposés à proximité de la surface avant 4. Le logement 9 présente une surface supérieure 9a et une surface inférieure 9b parallèles entre elles et parallèles aux surfaces supérieure 2 et inférieure 3 du corps 1, et des surfaces verticales droite 9c et gauche 9d, définissant une section rectangulaire.

La chambre de réserve 11 débouche sur la surface supérieure 2 par une ouverture 12. Une conduite 13 formée dans le corps 1, met en communication la partie inférieure 10b de la chambre de lavage 10 et le réservoir 11. Une conduite 14 met en communication le réservoir 11 et la partie supérieure 10a de la chambre de lavage 10. Un trou 15, formé dans le corps 1, débouche dans le réservoir 11 à partir de la surface inférieure 3 et est obturé par un bouchon 16 du type fileté, permettant le remplissage et la vidange dudit réservoir 11.

La chambre de réserve 11 comprend une partie inférieure 11a, dans laquelle débouchent les conduites 13 et 14 et une partie supérieure 11b de forme cylindrique de révolution, et dans laquelle est disposé un soufflet 17 en matériau synthétique, par exemple en élastomère ou en caoutchouc, possédant une jupe inférieure 17a assurant une étanchéité entre les parties inférieure 11a et supérieure 11b de la chambre de réservé 11 et en contact avec la paroi cylindrique de la chambre de réserve 11, une partie plissée 17 permettant au soufflet une variation de sa longueur axiale, l'axe considéré étant ici vertical, et une partie supérieure 17c en forme de disque.

Un bouton-poussoir 18 est disposé dans la partie supérieure 11b de la chambre de réserve 11 avec une surface inférieure en forme de disque, en contact avec la partie supérieure 17c du soufflet 17 et une partie supérieure en concordance de forme avec l'ouverture 12 et faisant saillie par rapport à la surface supérieure 2 du corps 1. L'enfoncement du bouton-poussoir 18 se traduit par un écrasement de la partie plissée 17b du soufflet 17 et une diminution du volume libre du réservoir 11. Un relâchement du bouton-poussoir 18 permet une détente du soufflet 17 qui retrouve sa forme initiale et une remontée dudit bouton-poussoir 18, accroissant ainsi le volume libre du réservoir 11.

En outre, un clapet 19 disposé dans la partie inférieure 11a du réservoir 11 au débouché de la conduite 13, autorise une circulation de fluide de la partie inférieure 10b de la chambre de lavage 10 vers le réservoir 11 en l'interdisant en sens contraire. Un clapet 20, disposé dans la conduite 14, autorise un circulation de fluide du réservoir 11 vers la partie supérieure 10a de la chambre de lavage 10 en l'interdisant en sens contraire.

Un organe de chargement ou tiroir 21, comprend une tête 22 formant poussoir en contact avec les surfaces 9a à 9d du logement 9 et une tige 23 s'étendant à partir de la tête 22 à l'opposé de la surface verticale droite 6 du corps 1, de hauteur inférieure à la tête 22 et de largeur égale, c'est-à-dire en contact avec les surfaces 9c et 9d du logement 9. Un trou traversant 24 circulaire est formé dans la tige 23 à son extrémité opposée à la tête 22, selon un axe vertical.

Dans la position illustrée sur la figure 1, le trou 24 est sensiblement coaxial avec la chambre de lavage 10, et l'extrémité libre de la tige 23 est sensiblement alignée avec la surface 8 du corps 1, tandis que l'extrémité libre de la tête 22 est sensiblement alignée avec la surface 6 du corps 1.

En outre, un réceptacle 25, en forme de manchon annulaire, est disposé dans le trou 24 et affleure les surfaces inférieure et supérieure de la tige 23. Une collerette annulaire formée sur la partie supérieure du réceptacle 25 vient s'ajuster en concordance de forme avec une rainure annulaire formée dans la tige 23 afin d'assurer le centrage et la retenue axiale du réceptacle 25 sur la tige 23. Le réceptacle 25 présente un alésage 26, cylindrique, débouchant du côté supérieur en direction de la surface 2 du corps 1, et présentant un premier épaulement 27 puis un deuxième épaulement 28 dans la direction opposée.

La machine à laver comprend en outre deux garnitures d'étanchéité 29 et 30, respectivement supérieure et inférieure, réalisées en matériau souple. La garniture d'étanchéité 29 est en contact avec la surface supérieure 9a du logement 9 et forme une cloison entre ledit logement 9 et la partie supérieure 10a de la chambre de lavage 10, en s'étendant latéralement au-delà de ladite chambre supérieure 10a.

En d'autres termes, la garniture d'étanchéité 29 comprend une portion centrale 31 obturant la partie supérieure 10a de la chambre 10 et une portion périphérique 32 en contact avec la surface supérieure 9a du corps 9. Des trous obliques 33 sont prévus dans la portion centrale 31, au nombre d'au moins deux, et permettent une communication entre la partie supérieure 10a de la chambre 10 et le logement 9. L'orientation des trous 33 est effectuée à la façon d'une hélice. Les trous 33 sont répartis sur un cercle fictif de diamètre sensiblement égal au diamètre moyen du roulement à laver.

La portion périphérique 32 de la garniture d'étanchéité 29 comprend deux lèvres concentriques extérieure 34 et intérieure 35. La lèvre extérieure 34 est de diamètre supérieur à celui du réceptacle 25, de façon à être en contact avec la tige 23 dans la position illustrée sur la figure 1. La lèvre intérieure 34 est de diamètre inférieur à celui de l'alésage 26 de réceptacle 25 pour pouvoir être en contact avec un élément disposé dans le réceptacle 25 et qui sera décrit plus loin. La garniture d'étanchéité 29 est maintenue en position par rapport au corps 1 par des bourrelets 36 et 37 en saillie vers le bas par rapport à la surface supérieure 9a du logement 9.

La garniture inférieure 30 est de forme annulaire avec une ouverture centrale 30a de diamètre égal à celui de la partie inférieure 10b de la chambre 10 et deux lèvres d'étanchéité concentriques extérieure 38 et intérieure 39. La lèvre d'étanchéité 38 est de diamètre supérieur à celui du réceptacle 25 pour être en contact avec la tige 23 lorsque le tiroir 21 est dans la position illustrée sur la figure 1. La lèvre d'étanchéité intérieure 39 présente un diamètre tel qu'elle est en contact avec la face inférieure du réceptacle 25, dans la même position que précédemment. Des bourrelets 40 et 41, en saillie par rapport à la surface inférieure 9b du logement 9, assurent le maintien en position de la garniture d'étanchéité 30 par rapport au corps 1. En outre, la machine à laver comprend un filtre amovible 42 monté dans le réceptacle 25, en contact avec l'épaulement 28.

La machine à laver est apte à recevoir un roulement 43, comprenant une bague intérieure 44, une bague extérieure 45 et une rangée d'éléments roulants 46, ici des billes. La bague extérieure 45 présente généralement une surface périphérique cylindrique. Le diamètre de l'alésage 26 du réceptacle 25 est adapté au diamètre extérieur du roulement 43 que l'on désire laver.

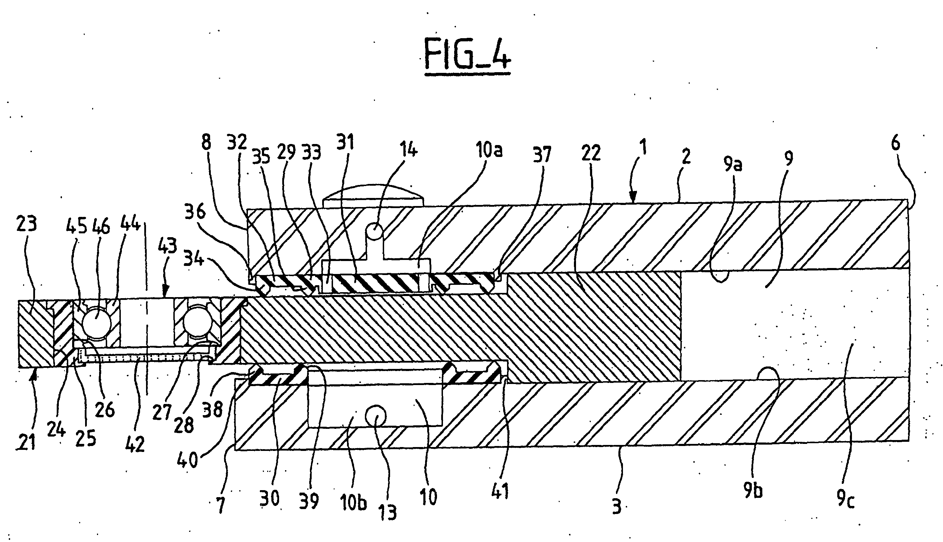

L'organe de chargement ou tiroir 21 est mobile en translation par rapport au corps 1, entre deux positions fonctionnelles. La position illustrée sur la figure 1 est dite « de lavage », et la position illustrée sur la figure 4 est dite « de chargement/déchargement ».

Dans la position illustrée sur la figure 4, la tête 22 est rentrée dans le logement 9, tandis que l'extrémité libre de la tige 23 et le réceptacle 25 font saillie du corps 1 à l'opposé de sa surface 6.

La machine forme un circuit de lavage fermé à circulation forcée par la pompe. Le circuit de lavage comprend la chambre de lavage 10, le réservoir 11, les conduites 13 et 14, les trous obliques 33, l'ouverture centrale 30a, et le filtre 42.

Le fonctionnement de la machine à laver est le suivant. Tout d'abord, le roulement que l'on souhaite laver est débarrassé de ses éventuels joints d'étanchéité qui sont fréquemment montés pour éviter l'intrusion de pollution à proximité des éléments roulants et/ou pour conserver du lubrifiant à proximité de ces mêmes éléments roulants.

Puis, dans la position de la machine à laver illustrée sur la figure 4, on dispose le roulement dans le réceptacle 25, la surface périphérique de la bague extérieure 45 venant en contact avec l'alésage 26 du réceptacle 25, tandis que l'une des surfaces frontales de la même bague extérieure 45 vient en contact avec l'épaulement 27 du réceptacle 25. La distance entre l'épaulement 27 et la surface supérieure du réceptacle 25 est également adaptée à la dimension, plus précisément à la longueur axiale du roulement 43 que l'on souhaite laver. Ainsi, le roulement 43 affleure la surface supérieure du réceptacle 25 et de la tige 23. On appuie ensuite sur l'extrémité libre de la tige 23 pour provoquer son enfoncement dans le logement 9 jusqu'à parvenir à la position illustrée sur les figures 1 et 2.

Au cours du mouvement de translation du tiroir 21, les lèvres d'étanchéité 34 et 35 de la garniture d'étanchéité 29 et 38 et 39 de la garniture d'étanchéité 30 sont en contact de frottement avec les surfaces correspondantes de la tige 23, du réceptacle 25 et du roulement 43, notamment la surface frontale supérieure de la bague extérieure et de la bague intérieure.

Dans la position illustrée sur la figure 4, lesdites lèvres d'étanchéité 34 et 35, 38 et 39 sont en contact avec la tige 23 et assurent l'étanchéité de la chambre 10 par rapport au milieu extérieur.

Dans la position illustrée sur la figure 1, lesdites lèvres d'étanchéité assurent également l'étanchéité de la chambre 10 par rapport au milieu extérieur.

Le réservoir 11 ayant au préalable été rempli d'un liquide de nettoyage, notamment un solvant, par exemple du White Spirit, l'utilisateur appuie sur le bouton-poussoir 18, ce qui provoque la compression axiale du soufflet 17, la diminution du volume libre du réservoir 11, le blocage du clapet 19, l'ouverture du clapet 20 et la circulation de fluide par la conduite 14, la partie supérieure 10a de la chambre de lavage 10, les trous obliques 33 de la garniture d'étanchéité 29, l'espace annulaire entre les bagues intérieure 44 et extérieure 45 du roulement 43, le filtre 42 et la partie inférieure 10b de la chambre de lavage 10.

On remarque en particulier que les trous 33 sont disposés en regard des éléments roulants, c'est-à-dire en regard de la zone du roulement qu'il convient de laver. Le fluide s'écoulera ainsi principalement par l'espace entre les bagues du roulement et non par l'alésage de la bague intérieure dont le nettoyage ne présente guère d'intérêt.

Le filtre 42 permet de bloquer les impuretés et de bénéficier d'un fluide relativement propre dans la partie inférieure 10b de la chambre de lavage 10. Au relâchement du bouton-poussoir 18, le soufflet 17 repousse ledit bouton-poussoir 18 vers le haut par élasticité, accroissant ainsi le volume libre du réservoir 11. Ceci provoque le blocage du clapet 20, l'ouverture du clapet 19 et la circulation de fluide par la conduite 13 vers le réservoir 11 en provenance de la partie inférieure 10b de la chambre de lavage 10, ainsi que, le cas échéant, l'écoulement du fluide restant dans la partie supérieure 10a ou dans le roulement 43 à travers le filtre 42.

Comme on peut le voir sur la figure 3, les trous obliques 33 formés par la portion centrale 31 de la garniture d'étanchéité 29 forment des sortes de buses qui confèrent au fluide de lavage lors de son écoulement une direction qui tend à faire tourner les éléments roulants 46 du roulement 43. Un déplacement angulaire, même faible, desdits éléments roulants 46, est particulièrement bénéfique pour le nettoyage qui s'avère plus efficace qu'avec un roulement complètement à l'arrêt.

L'utilisateur peut presser plusieurs fois sur le bouton-poussoir 18 en le laissant revenir en position initiale entre chaque coup pour obtenir un bon lavage du roulement 43. Ensuite, l'utilisateur vient pousser sur l'extrémité libre de la tête 22 qui affleure la surface latérale 6 du corps 1 pour l'enfoncer dans le logement 9 jusqu'à la position illustrée sur la figure 4. Le roulement 43 peut alors être déchargé du réceptacle 25 et un autre roulement à laver peut être mis en place. En outre, le réceptacle 25 peut être changé et remplacé par un réceptacle présentant des dimensions intérieures, notamment d'alésage et de longueur axiale d'alésage, adaptées au roulement suivant que l'on souhaite laver.

La machine à laver est ainsi capable de laver différents types de roulements, seul le réceptacle devant être changé si l'alésage ou la longueur axiale du roulement change, les autres pièces de ladite machine à laver restant les mêmes pour un grand nombre de roulements différents.

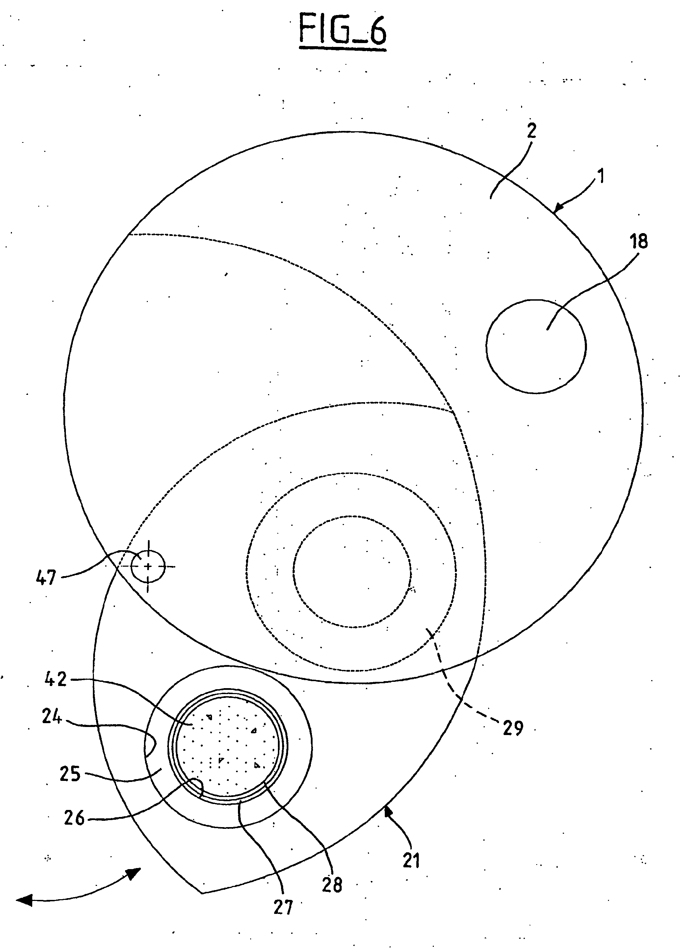

Sur la figure 6, est illustrée une autre machine à laver dont le principe de fonctionnement est le même, à ceci près que le corps présente une forme circulaire et que le tiroir est monté à rotation par rapport au corps au moyen d'un axe de pivotement 47, le tiroir étant représenté en position de chargement/déchargement. Les mêmes organes sont disposés à l'intérieur du corps et le fonctionnement lors de l'étape de lavage est identique.

L'invention permet un nettoyage aisé d'un roulement qui nécessite fréquemment cette opération et permet en outre, grâce au filtre, de régénérer le liquide de nettoyage et donc de réduire la consommation de produit solvant.

À titre de variante, on pourrait prévoir un système à pêne lié au tiroir et venant verrouiller le bouton-poussoir lorsque le tiroir est en position de chargement/déchargement.

Dans tous les modes de réalisation, on bénéficie d'une machine à laver extrêmement compacte, facile à transporter, à entreposer et à mettre en oeuvre, ne nécessitant pas de branchement sur une source d'énergie extérieure, et capable de laver rapidement et efficacement différents types de roulements.

L'invention est particulièrement bien adaptée pour les roulements de petites dimensions, tels que ceux qui sont montés dans les patins en ligne, les patins à roulettes, les planches à roulettes ou encore les bicyclettes. La circulation forcée du fluide assure un bon lavage du roulement.

## Revendications

1. Dispositif de lavage portable autonome, comprenant un corps (12) définissant un logement (9), et un organe de chargement (21) apte à recevoir au moins un roulement (43), ledit organe étant capable d'occuper au moins une position de lavage dans laquelle ledit organe est positionné au moins en partie dans ledit logement, **caractérisé par le fait qu'**il comprend un circuit de lavage (10, 11, 13, 14, 33, 30a, 42) à circulation forcée, ledit organe étant capable d'occuper au moins une position de chargement dans laquelle ledit organe est solidaire dudit corps, le roulement étant disposé dans le circuit de lavage à circulation forcée lorsque ledit organe occupe la position de lavage.

2. Dispositif selon la revendication 1, dans lequel l'organe de chargement comprend au moins un réceptacle (25) pour un roulement.

3. Dispositif selon la revendication 1 ou 2, dans lequel l'organe de chargement comprend au moins un filtre amovible (42).

4. Dispositif selon l'une quelconque des revendications précédentes, lequel comprend des garnitures d'étanchéité (29, 30) solidaires du corps, en contact avec l'organe de chargement et assurant l'étanchéité entre ledit corps et l'organe de chargement.

5. Dispositif selon la revendication 4, dans lequel lesdites garnitures d'étanchéité comprennent des orifices (33) de passage de fluide.

6. Dispositif selon la revendication 5, dans lequel au moins un orifice (33) de passage de fluide est incliné par rapport à un plan passant par un axe de l'organe de chargement.

7. dispositif selon l'une quelconque des revendications 4 à 6, dans lequel lesdites garnitures d'étanchéité comprennent au moins une lèvre circulaire (34) prévue pour coopérer avec au moins une bague de roulement.

8. Dispositif selon l'une quelconque des revendications 4 à 7, dans lequel au moins une garniture d'étanchéité comprend une ouverture centrale (30a).

9. Dispositif selon l'une quelconque des revendications précédentes, lequel comprend une pompe de circulation de fluide dans le circuit de lavage.

10. Dispositif selon la revendication 9, dans lequel la pompe est à actionnement manuel et solidaire dudit corps.

11. Dispositif selon l'une quelconque des revendications précédentes, dans lequel l'organe de chargement est mobile en translation par rapport au corps.

12. Dispositif selon l'une quelconque des revendications 1 à 10, dans lequel l'organe de chargement est mobile en rotation par rapport au corps.

13. Dispositif selon l'une quelconque des revendications précédentes, lequel comprend un réservoir (11) de fluide ménagé dans ledit corps.

## Claims

1. Autonomous and portable cleaning device comprising a body (12) defining a housing (9), and a loading member (21) capable of accommodating at least one rolling-contact bearing (43), the said member being capable of occupying at least one cleaning position in which the said member is positioned at least partly in the said housing, the said device being **characterized in that** it comprises a forced-circulation cleaning circuit (10, 11, 13, 14, 33, 30a, 42), the said member being capable of occupying at least one loading position in which the said member is connected to the said body, and the bearing being placed in the forced-circulation cleaning circuit when the said member is occupying the cleaning position.

2. Device according to Claim 1, in which the loading member comprises at least one receptacle (25) for a bearing.

3. Device according to Claim 1 or 2, in which the loading member comprises at least one removable filter (42).

4. Device according to any one of the preceding claims, comprising gaskets (29, 30) connected to the body, in contact with the loading member and providing sealing between the said body and the loading member.

5. Device according to Claim 4, in which the said gaskets include orifices (33) for the passage of fluid.

6. Device according to Claim 5, in which at least one fluid passage orifice (33) is inclined with respect to a plane passing through an axis of the loading member.

7. Device according to any one of Claims 4 to 6, in which the said gaskets include at least one circular lip (34) designed to act on at least one bearing ring.

8. Device according to any one of Claims 4 to 7, in which at least one gasket includes a central opening (30a).

9. Device according to any one of the preceding claims, comprising a pump for circulating fluid around the cleaning circuit.

10. Device according to Claim 9, in which the pump is hand-powered and integral with the said body.

11. Device according to any one of the preceding claims, in which the loading member can move translationally with respect to the body.

12. Device according to any one of Claims 1 to 10, in which the loading member can rotate with respect to the body.

13. Device according to any one of the preceding claims, comprising a reservoir (11) of fluid within the said body.

## Patentansprüche

1. Selbstständige tragbare Waschvorrichtung mit einem einen Aufnahmeraum (9) bildenden Grundkörper (12), einem Eingabeelement (21), das dazu eingerichtet ist, wenigstens ein Lager (43) aufzunehmen, wobei das Eingabeelement wenigstens eine Waschstellung einnehmen kann, in der das Eingabeelement zumindest teilweise in dem Aufanhmeraum positioniert ist, **dadurch gekennzeichnet, dass** sie einen Waschkreislauf (10,11,13,14,33,30a,42) mit Zwangszirkulation aufweist, dass das Eingabeelement in der Lage ist, wenigstens eine Beladungsposition einzunehmen, in der das Eingabeelement mit dem Grundkörper verbunden ist und dass das Lager in dem Waschkreislauf mit Zwangszirkulation angeordnet ist, wenn sich das Eingabeelement in der Waschstellung befindet.

2. Anordnung nach Anspruch 1, bei der das Eingabeelement wenigstens eine Aufnahme (25) für ein Lager aufweist.

3. Anordnung nach den Ansprüchen 1 oder 2, bei der das Eingabeelement wenigstens ein herausnehmbares Filter enthält.

4. Vorrichtung nach einem der vorhergehenden Ansprüche, bei der an dem Grundkörper Dichtungsanordnungen (29, 30) befestigt sind, die mit dem Eingabeelement in Berührung stehen und die Abdichtung zwischen dem Grundkörper und dem Eingabeelement gewährleisten.

5. Vorrichtung nach Anspruch 4, bei der die Dichtanordnungen Fluiddurchlassöffnungen (33) aufweisen.

6. Anordnung nach Anspruch 5, bei der wenigstens eine Fluiddurchlassöffnung (33) gegenüber einer Ebene schräg geneigt ist, die durch eine Achse des Eingabeelements führt.

7. Vorrichtung nach einem der Ansprüche 4 bis 6, bei der die Dichtungsanordnungen wenigstens eine kreisförmig verlaufende Lippe (34) umfassen, die dazu vorgesehen ist, mit wenigstens einem Ring des Lagers zusammenzuwirken.

8. Vorrichtung nach einem der Ansprüche 4 bis 7, bei der wenigstens eine Dichtungsanordnung eine zentrale Öffnung (30a) enthält.

9. Vorrichtung nach einem der vorhergehenden Ansprüche, bei der eine Fluidzirkulationspumpe in dem Waschkreislauf enthalten ist.

10. Vorrichtung nach Anspruch 9, bei der die Pumpe manuell zu betätigen ist und mit dem Grundkörper verbunden ist.

11. Vorrichtung nach einem der vorhergehenden Ansprüche, bei der das Eingabeelement gegenüber dem Grundkörper translatorisch bewegbar ist.

12. Vorrichtung nach einem der Ansprüche 1 bis 10, bei der das Eingabeelement gegenüber dem Grundkörper drehbar ist.

13. Vorrichtung nach einem der vorhergehenden Ansprüche, bei der ein Fluidbehälter (11) in dem Grundkörper vorgesehen ist.
